Europäisches Patentamt

European Patent Office

Office européen des brevets

(11) Numéro de publication : **0 374 090 B1**

# (12) FASCICULE DE BREVET EUROPEEN

(45) Date de publication du fascicule du brevet :
26.08.92 Bulletin 92/35

(51) Int. Cl.⁵ : **D05B 27/22, F16H 57/12**

(21) Numéro de dépôt : **89810851.9**

(22) Date de dépôt : **08.11.89**

(54) **Machine à coudre.**

(30) Priorité : **30.11.88 CH 4444/88**

(43) Date de publication de la demande :
**20.06.90 Bulletin 90/25**

(45) Mention de la délivrance du brevet :
**26.08.92 Bulletin 92/35**

(84) Etats contractants désignés :
**DE ES FR GB IT SE**

(56) Documents cités :
**DE-C- 3 121 266**
**DE-C- 3 234 688**
**FR-A- 1 401 129**
**GB-A- 249 970**

(73) Titulaire : **MEFINA SA**
**5A, boulevard de Pérolles**
**CH-1700 Fribourg (CH)**

(72) Inventeur : **Jimenez, Antonio**
**19, rue de la Prulay**
**CH-1217 Meyrin (CH)**
Inventeur : **Rochat, Pierre Maurice**
**23, Rue du Pont-Neuf**
**CH-1341 L'Orient (CH)**

(74) Mandataire : **Dousse, Blasco et al**
**7, route de Drize**
**CH-1227 Carouge/Genève (CH)**

EP 0 374 090 B1

## Description

La présente invention se rapporte à une machine à coudre comprenant un mécanisme de transport du tissu associé à un dispositif de réglage de l'amplitude et du sens de l'entraînement du tissu, ce mécanisme comportant un arbre d'entraînement et un organe de transport du tissu dont deux extrémités opposées sont reliées cinématiquement à cet arbre d'entraînement par deux transmissions à bielles et leviers dont l'une définit une première trajectoire de déplacement dans une direction sensiblement parallèle à un plan de support du tissu tandis que l'autre définit une seconde trajectoire de déplacement dans une direction sensiblement perpendiculaire à ce plan, ledit dispositif de réglage comprenant une coulisse présentant deux pistes en arc de cercles concentriques centrées sur une trajectoire décrite par une articulation entre deux bielles, cette coulisse étant montée rotativement autour d'un axe passant par le centre de cette trajectoire.

Il existe déjà sur le marché des machines à coudre dont le mécanisme de transport est muni d'un tel dispositif de réglage de son amplitude et de son sens d'entraînement du tissu (voir DE.C.3 121 266). Dans ces machines vendues sous la marque Elna types 5000, 6000 et 7000, la position angulaire de la came de commande est déterminée à l'aide d'un moteur pas à pas.

Un problème posé par ce dispositif de réglage provient du guidage de l'axe d'articulation entre la bielle et la biellette le long d'une coulisse formée de deux pistes en arcs de cercles concentriques. L'engagement entre un tel profil de came et un palpeur concentrique à l'axe d'articulation susmentionné, ne permet pas de réaliser un ajustement trop serré, du fait du risque de grippage entre l'organe palpeur et la coulisse. Pour éviter cet inconvénient, un faible jeu subsiste entre la coulisse et l'organe palpeur monté autour de l'axe d'articulation. Ce jeu constitue une source d'imprécision de la course de transport du tissu, notamment en cas de changement du sens de ce transport. Ceci se traduit, notamment dans le cas de la couture d'un boutonnière, par des lèvres adjacentes pouvant être de longueurs différentes. En effet, aussi petite que soit cette erreur, en se multipliant par le nombre de points, elle finit par devenir visible à l'oeil, surtout dans le cas d'un motif symétrique du type de celui d'une boutonnière.

Le but de la présente invention est de remédier, au moins partiellement, à cette source d'erreur, à l'aide d'une solution permettant d'éliminer tout jeu entre la coulisse du dispositif de règlage et l'axe d'articulation.

A cet effet, la présente invention a pour objet une machine à coudre selon la revendiction 1.

Grâce à cette disposition, chaque piste en arc de cercle n'est en prise qu'avec un galet, de sorte que chaque galet peut rouler sans glissement sur sa piste, ce qui permet d'éliminer complètement tout jeu entre coulisse et galet et, par là-même, une importante source d'erreur dans la longueur des points définie par le dispositif de règlage. Une amélioration importante est ainsi apportée au problème bien connu de la couture de motifs symétriques allongés dans la direction de transport du tissu. La solution apportée est simple et elle rend le dispositif de règlage insensible aux problèmes d'usure.

Le dessin annexé illustre, schématiquement et à titre d'exemple, une forme d'exécutin et une variante du mécanisme de transport de la machine à coudre objet de la présente invention.

Les figures 1 et 2 sont deux schémas explicatifs du fonctionnement de ce mécanisme de transport.

La figure 3 est une vue en coupe d'une forme d'exécutin de ce mécanisme, selon la ligne III-III des figures 4 et 5.

La figure 4 est une vue en coupe selon la ligne IV-IV de la figure 3.

La figure 5 est une vue en coupe selon la ligne V-V de la figure 3.

La figure 6 est une vue en coupe d'un détail d'une variante de la forme d'exécution de la figure 3.

La figure 7 est une vue en coupe selon la ligne VII-VII de la figure 6.

La figure 8 est vue en coupe selon la ligne VIII-VIII de la figure 6.

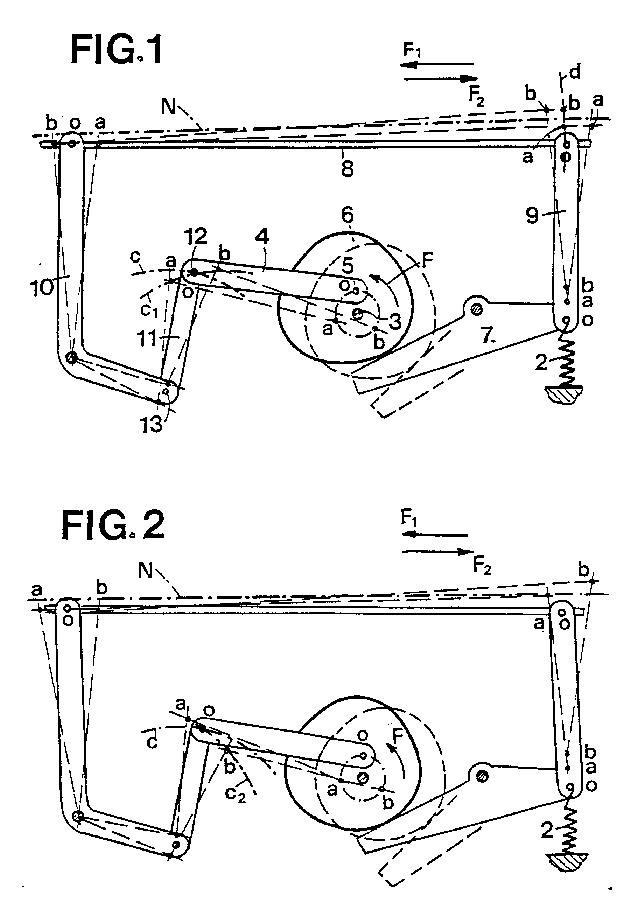

Le principe du mécanisme de transport du tissu et de son dispositif de règlage sont illustrés par les figures 1 et 2. Ce mécanisme comporte un arbre d'entraînement 3 solidaire d'une bielle 4 dont une extrémité est articulée autour d'un excentrique 5 décrivant une trajectoire circulaire autour de l'axe de cet arbre d'entraînement 3. Cet arbre 3 porte également une came 6 contre laquelle appuie un bras d'un levier 7 dont l'autre bras est relié à une extrémité d'un organe de transport du tissu 8 par une bielle 9. Un ressort de rappel 2 tend à maintenir le levier 7 en contact avec la came 6.

L'autre extrémité de cet organe de transport 8 est articulée à un bras d'un levier 10 dont l'autre bras est relié à la bielle 4 par une biellette 11.

Supposons que l'extrémité 5 de la bielle 4 occupe la position o autour de l'axe de l'arbre d'entraînement 3 correspondant à la position médiane de la trajectoire définie par l'excentrique 5. Les autre éléments du mécanisme occupent les positions o respectives illustrées en trait continu. Si l'arbre d'entraînement 3 se met à tourner dans le sens de la flèche F, l'articulation 12 entre la bielle 4 et la biellette 11 décrit un arc de cercle c centré sur l'articulation 13 entre la biellette 11 et le bras du levier 10 auquel son autre extrémité est articulée. Par conséquent, ce levier 10 reste immobile. Pendant ce temps, le levier 7 est déplacé par la came 6 du point o au point b, sur la trajectoire en arc de cercle d de l'extrémité de l'organe 8, centrée sur le levier 10 immobile.

Ce mouvement de l'organe de transport du tissu 8 a donc pour seul résultat de soulever cet organe sans lui communiquer de mouvement dans un sens F1 ou F2 correspondant au transport vers l'avant ou vers l'arrière du tissu. Supposons maintenant que l'on incline la trajectoire circulaire c autour de la position médiane o de l'articulation 12 pour imprimer à cette articulation 12 une nouvelle tajectoire $c_1$. Lorsque la bielle 4 passe de la position o à la position a, l'articulation 12 est alors déplacée en a sur la trajectoire $c_1$, faisant ainsi basculer le levier 10 également dans la position a (fig. 1). Pendant ce temps, le levier 7 est aussi déplacé dans la position a, de sorte que l'organe de transport 8 soumis aux mouvements conjugués du levier 10 et de la bielle 9 est déplacé de la position o à la position a qui correspond à un soulèvement accompagné d'un déplacement dans le sens de la flèche $F_2$ Etant donné que ce déplacement de o à a s'effectue au-dessous du niveau N qui correspond à la limite d'entraînement du tissu, celui-ci n'est pas entraîné. De a à b, le mouvement du levier 10 est inversé, de sorte qu'il entraîne l'organe de transport 8 dans le sens $F_1$, tandis que la bielle 9 passe du niveau du point a à celui du point b, élevant encore le niveau de l'extrémité de l'organe de transport 8. La course de a à b de cet organe 8 s'effectue donc entièrement au-dessus du niveau N, de sorte que le tissu est entraîné dans le sens $F_1$. L'amplitude de ce déplacement dépend de l'inclinaison donnée à la trajectoire c de l'axe d'articulation 12 qui va donc de zéro dans la position c de la trajectoire, au maximum, illustré par la trajectoire $c_1$.

En inclinant cette trajectoire c dans l'autre sens, par exemple dans la position de la trajectoire $c_2$ illustrée par la figure 2, on obtient un transport du tissu en sens inverse. En effet de o à a le levier 10 est d'abord entraîné dans le sens $F_1$ alors que le levier 7 et la came 6 amènent la bielle 9 et l'organe de transport au niveau d'entraînement N. De a à b le déplacement s'effectue, au-dessus de ce niveau d'entraînement N dans le sens $F_2$, c'est-à-dire en sens inverse de celui de la figure 1, de sorte que le tissu est transporté dans ce sens $F_2$, le déplacement en sens $F_1$ s'effectuant lui, au-dessous du niveau d'entraînement comme précédemment, l'amplitude de la course du tissu égale à une longueur de point peut être modifiée de zéro au maximum en variant l'inclinaison de la trajectoire c jusqu'à la trajectoire $c_2$.

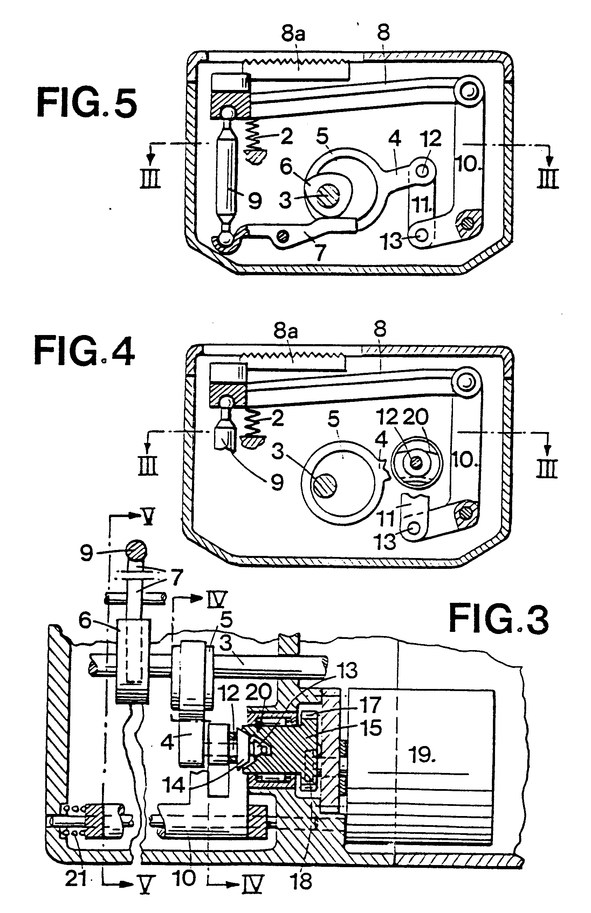

Le principe du fonctionnement de ce mécanisme et du réglage du sens et de l'amplitude de la course de transport égale à une longueur de point ayant été expliqués, nous décrirons maintenant une forme d'exécution illustrée par les figures 3 à 5 et nous nous attacherons plus particulièrement au dispositif utilisé pour régler l'inclinaison de la trajectoire c. On reconnaît sur ces figures, l'arbre d'entraînement 3, la bielle 4 reliée à l'arbre 3 par l'excentrique 5 définissant.la trajectoire circulaire autour de l'axe de cet arbre 3, la portion du levier 10 articulée à la biellette 11 et l'axe d'articulation 12 entre cette biellette 11 et la bielle 4. On reconnaît par ailleurs la came 6, le levier 7, la bielle 9 et l'organe de transport 8 portant une griffe 8a destinée à venir en prise avec le tissu lors de son transport.

Comme on le voit sur la figure 3, l'axe 12 porte deux galets tronconiques 13 et 14 qui s'engagent dans une coulisse 20 ménagée dans un mobile 15 monté pivotant dans un palier à aiguilles 16 fixé dans un bâti B portant le mécanisme de transport. Ce mobile 15 porte une denture 17 destinée à venir en prise avec un pignon 18 solidaire de l'arbre d'un moteur pas à pas 19 et destiné à orienter la coulisse 20 autour du point central o de la trajectoire de l'axe 12, comme illustré par les figures 1 et 2. Un ressort 21, disposé entre le bâti B et le levier 10 presse axialement le levier, et par conséquent l'axe 12 et les galets 13 et 14 qu'il porte, en direction du mobile 15.

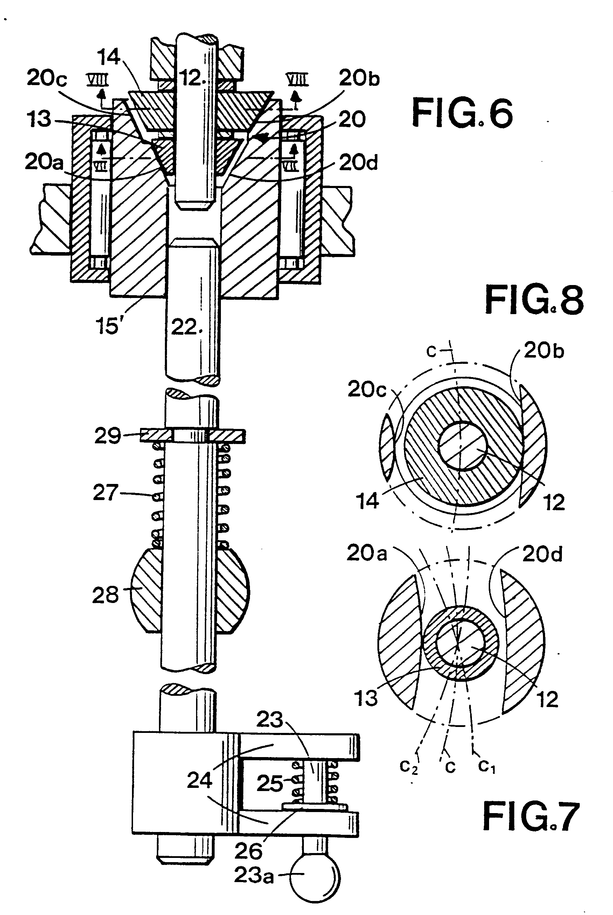

Si l'on se reporte aux figures 6 à 8 pour examiner plus en détail la coulisse 20 et les galets 13 et 14, on constate que cette coulisse est formée de deux pistes en arc de cercles concentriques 20a et 20b, engendrées par un cône roulant sur la trajectoire de l'axe 12. La piste interne 20a présente vers la base du tronc de cône un dégagement 20c qui se situe au niveau du galet 14, tandis que la piste externe 20b présente un dégagement 20d qui se situe au niveau du galet 13. Etant donné que les pistes 20a, 20b sont engendrées par des surfaces tronconiques de même angle au sommet que celui des galets 13-14 roulant le long de la trajectoire c (fig 1,2 et 7), les galets 13 et 14, pressés par le ressort 21 (fig 3) sont en contact avec les pistes interne 20a respectivement externe 20b. Compte tenu de la différence de chemin parcouru sur chacune de ces pistes pour une même distance angulaire autour de l'axe 13 de la biellette 11 (fig 1 et 2), chacun des galets n'étant en prise qu'avec une pistes formant la coulisse 20, il n'y a plus de problèmes de frottement ni de coincement et aucun jeu n'est nécessaire pour les empêcher. La présence du ressort 21 et la forme conique des galets et de la coulisse supprime d'ailleurs toute possibilité de jeu.

Lors du fonctionnement, la longueur et le sens de la course d'entraînement de l'organe de transport 8 sont définis par l'orientation angulaire de la coulisse 20 autour de l'axe de rotation du mobile 15, définissant ainsi la position de la trajectoire c autour de cet axe, entre les positions limites $c_1$ et $c_2$ (fig 7) comme on l'a expliqué en détail en relation avec les figures 1 et 2. Dans un machine à coudre à commande informatisée, le moteur pas-à-pas 19 reçoit les ordres pour positionner angulairement la coulisse 20, d'un microprocesseur (non représenté).

Il faut encore relever que, comme illustré par la figure 3, l'ensemble du mécanisme de transport décrit ci-dessus, ainsi que le moteur 19 de positionnement de son dispositif de règlage de l'amplitude et du sens d'entraînement agissant sur la position angulaire de la coulisse 20, sont solidaires du bâti B, lequel est fixé par des organes de fixation usuels (non représentés) au bâti principal B' de la machine à coudre. De ce fait le mécanisme de transport et son moteur de positionnement forment un ensemble complètement indépendant.

La variante illustrée par la figure 6 ne diffère de la forme d'exécution de la figure 3 que par le fait que le mobile 15'qui porte la coulisse 20 est solidaire de l'extrémité d'un arbre 22 qui porte à son autre extrémité un excentrique formé par une tige 23 parallèle à l'axe montée coulissante à travers deux flasques 24 et pressée axialement par un ressort 25 dont une extrémité s'appuie contre l'un des flasques 24 tandis que l'autre extrémité s'appuie contre une collerette 26 crochée sur cette tige 23 dont l'extrémité externe se termine par une surface sphérique 23a destinée à venir en prise avec un organe d'entraînement pour positionner angulairement la coulisse 20 autour de l'axe de l'arbre 22. Un ressort 27, dont la fonction est équivalente à celle du ressort 21 de la fig 3, disposé autour de l'arbre 22, prend appui, d'une part, contre une bague 28 destinée à être solidaire du bâti et dans laquelle coulisse cet arbre 22 et, d'autre part une collerette 29 crochée sur cet arbre, appliquant ainsi élastiquement la coulisse 20 contre les galets 13 et 14.

## Revendications

1. Machine à coudre comprenant un mécanisme de transport du tissur associé à un dispositif de règlage de l'amplitude et du sens de l'entraînement du tissu, ce mécanisme comportant un arbre d'entraînement (3) et un organe de transport du tissu (8) dont deux extrémités opposées sont reliées cinématiquement à cet arbre d'entraînement par deux transmissions à bielles et leviers dont l'une définit une première trajectoire de déplacement dans une direction sensiblement parallèle à un plan de support du tissu tandis que l'autre définit une seconde trajectoir de déplacement dans une direction sensiblement perpendiculaire à ce plan, ledit dispositif de règlage comprenant une coulisse (20) présentant deux pistes en arcs de cercles concentriques centrées sur une trajectoire (c) décrite par une articulation (12) entre deux bielles, cette coulisse étant montée pivotante autour d'un axe passant par le centre de cette trajectoire, caractérisée par le fait que cet axe d'articulation (12) porte deux galets (13,14) associés à des moyens élastiques (21,27) pour mettre respectivement ces galets (13,14) en prise avec lesdites pistes (20a, 20b).

2. Machine à coudre selon la revendication 1, caractérisée par le fait que ledit arbre d'entraînement (3) est solidaire d'un excentrique (5) en prise avec une bielle (4) et d'une came (6) en prise avec un levier (7), que l'une des extrémités dudit organe de transport (8) est articulée à un bras d'un levier (10) définissant ladite première trajectoire et l'autre extrémité est reliée cinématiquement à ladite came (6) qui définit ladite seconde trajectoire, le second bras dudit levier (10) étant relié à l'extrémité libre de la bielle (4) par une biellette (11) qui définit, pour l'extrémité de cette bielle (4) articulée à la biellette (11), ladite trajectoire en arc de cercle (c) autour du second bras de ce levier (10), l'axe d'articulation (12) entre cette bielle (4) et cette biellette (11) étant en prise avec ladite coulisse (20).

3. Machine à coudre selon la revendication 1, caractérisée par le fait que lesdites pistes en arcs de cercles (20a, 20b) sont définies par le roulement d'un cône le long de la trajectoire dudit axe d'articulation, un dégagement (20c, 20d) étant ménagé sur une portion de la largeur de chacune de ces pistes et sur toute leur longueur, le dégagement d'une piste étant décalé axialement par rapport à celui de l'autre piste, chacun desdits galets (13, 14) étant tronconique, le diamètre et d'angles correspondants à ceux desdites pistes respectives et sont pivotés autour dudit axe d'articulation (12), lesdits moyens élastiques tendant à exercer une pression axiale entre ces galets et ces pistes.

4. Machine à coudre selon la revendication 1, caractérisée par le fait que ledit mécanisme de transport du tissu et son dispositif de règlage de l'amplitude et du sens de l'entraînement du tissu sont montés sur un bâti (B) indépendant de celui de la machine à coudre (B') et que ce bâti porte un moteur (19) pour l'actionnement dudit dispositif de règlage.

## Patentansprüche

1. Nähmaschine mit einem Stofftransportmechanismus, dem eine Vorrichtung zur Einstellung der Amplitude und der Richtung des Stofftransports zugeordnet ist und der eine Antriebswelle (3) und ein Stofftransportorgan (8) besitzt, dessen beide einander entgegengesetzten Enden kinematisch mit dieser Antriebswelle durch zwei Stangen- und Hebelgetriebe verbunden sind, deren eines eine erste Bewegungsbahn in einer zu einer Auflageebene des Stoffs im wesentlichen parallelen Richtung definiert, während das andere eine zweite Bewegungsbahn in einer zu dieser Ebene im wesentlichen senkrechten Richtung definiert, wobei die Einstellvorrichtung eine Gleitführung (20) mit zwei konzentrischen, kreisbogenförmigen Bahnen besitzt, die auf eine von einem Gelenk (12) zwischen zwei Stangen beschriebene Bahn (c) zentriert sind, und um eine durch die Mitte dieser Bahn laufende Achse drehbar montiert ist, dadurch gekennzeichnet, daß die Gelenkachse (12) zwei Rollen (13, 14) trägt, denen elastische Einrichtungen (21, 27) zugeordnet sind, die die Rollen (13, 14) jeweilig mit den Bahnen (20a, 20b) in Eingriff bringen.

2. Nähmaschine nach Anspruch 1, dadurch gekennzeichnet, daß mit der Antriebswelle (3) ein Exzenter (5), der mit einer Stange (4) in Eingriff ist, und eine Kurvenscheibe (6) fest verbunden ist, die mit einem Hebel (7) in Eingriff ist, und daß eines der Enden des Transportorgans (8) an einem Arm eines Hebels (10) angelenkt ist, der die erste Bewegungsbahn definiert, und das andere Ende kinematisch mit der Kurvenscheibe (6) verbunden ist, die die zweite Bewegungsbahn definiert, wobei der zweite Arm des Hebels (10) mit dem freien Ende der Stange (4) durch eine Stange (11) verbunden ist, die für das Ende der an der Stange (11) angelenkten Stange (4) die kreisbogenförmige Bewegungsbahn (c) um den zweiten Arm des Hebels (10) herum definiert, und die Gelenkachse (12) zwischen der Stange (4) und der Stange (11) mit der Gleitführung (20) in Eingriff ist.

3. Nähmaschine nach Anspruch 1, dadurch gekennzeichnet, daß die kreisbogenförmigen Bahnen (20a, 20b) durch das Rollen eines Regels entlang der Bewegungsbahn der Gelenkachse definiert sind, wobei eine Ausnehmung (20c, 20d) auf einem Teil der Breite jeder Bahn und auf ihrer gesamten Länge vorgesehen ist, die Ausnehmung einer Bahn axial gegen die der anderen Bahn versetzt ist, jede der Rollen (13, 14) kegelstumpfförmig ist, wobei Durchmesser und Winkel denen der jeweiligen Bahnen entsprechen, und um die Gelenkachse (12) drehbar sind und die elastischen Einrichtungen bestrebt sind, zwischen den Rollen und den Bahnen einen axialen Druck auszuüben.

4. Nähmaschine nach Anspruch 1, dadurch gekennzeichnet, daß der Stofftransportmechanismus und seine Vorrichtung zur Einstellung der Amplitude und der Richtung des Stofftransports auf einem vom Rahmen (B') der Nähmaschine unabhängigen Rahmen (B) montiert sind und daß dieser Rahmen einen Motor (19) zum Antrieb der Einstellvorrichtung trägt.

## Claims

1. A sewing machine comprising a fabric transporting mechanism associated with a device for regulating the amplitude and the direction of the conveying of the fabric, this mechanism comprising a drive shaft (3) and a fabric transporting member (8) whose two opposite ends are linked kinematically to this drive shaft by two connecting-rod-and-lever transmissions one of which defines a first displacement path in a direction substantially parallel to a fabric support plane while the other defines a second displacement path in a direction substantially perpendicular to this plane, the said regulating device comprising a slide (20) having two tracks which are in the form of arcs of concentric circles and are centred on a path (c) described by an articulation (12) between two connecting rods, this slide being pivotally mounted about an axis passing through the centre of this path, characterized by the fact that this articulation pin (12) bears two rollers (13, 14) associated with resilient means (21, 27) for engaging these rollers (13, 14) with the said tracks (20a, 20b) respectively.

2. A sewing machine in accordance with Claim 1, characterized by the fact that the said drive shaft (3) is firmly attached to an eccentric (5) engaged with a connecting rod (4) and is firmly attached to a cam (6) engaged with a lever (7), that one of the ends of the said transporting member (8) is articulated to an arm of a lever (10) defining the said first path and the other end of which is linked kinematically to the said cam (6) which defines the said second path, the second arm of the said lever (10) being linked to the free end of the connecting rod (4) by a short connecting rod (11) which defines, for the end of this connecting rod (4) articulated to the short connecting rod (11), the said path in the form of an arc of a circle (c) about the second arm of this lever (10), the articulation pin (12) between this connecting rod (4) and this short connecting rod (11) engaging with the said slide (20).

3. A sewing machine in accordance with Claim 1, characterized by that fact that the said tracks in the form of arcs of circles (20a, 20b) are defined by the rolling of a cone along the path of the said articulation pin, a clearance (20c, 20d) being provided over a portion of the width of each of these tracks and over their entire length, the clearance of one track being axially out-of-line with respect to that of the other track, each of the said rollers (13, 14) being in the shape of a truncated cone and having a diameter and angles corresponding to those of the said respective tracks and being pivoted about the said articulation pin (12), the said resilient means tending to exert axial pressure between these rollers and these tracks.

4. A sewing machine in accordance with Claim 1, characterized by the fact that the said fabric transporting mechanism and its regulating device for the amplitude and the direction of conveying of the fabric are mounted on a supporting structure (B) independent of that of the sewing machine (B') and that this supporting structure bears a motor (19) for the activation of the said regulating device.

FIG.1

FIG.2

FIG.5

FIG.4

FIG.3

FIG.6

FIG.8

FIG.7